# EUROPÄISCHE PATENTSCHRIFT

(11) **EP 0 422 338 B1**
(45) Veröffentlichungstag und Bekanntmachung des Hinweises auf die Patenterteilung: **11.01.1995**
(21) Anmeldenummer: 90112988.2
(22) Anmeldetag: 07.07.1990
(51) Int. Cl.: F16F 9/28

(54) **Hydraulischer Schwingungsdämpfer**
Liquid-dampening vibration absorber
Amortisseur de vibrations à liquide

(30) Priorität: 10.10.1989 DE 3933749
(43) Veröffentlichungstag der Anmeldung: 17.04.1991
(73) Patentinhaber: HEMSCHEIDT FAHRWERKTECHNIK GmbH & Co., 42109 Wuppertal (DE)
(72) Erfinder: Runkel, Walter, Dr. Dipl.-Ing., D-5600 Wuppertal 2 (DE); Hummel, Kurt M. Ing (grad.), D-5600 Wuppertal 1 (DE)
(74) Vertreter: Patentanwälte Dr. Solf & Zapf

(56) Entgegenhaltungen:
- BE-A- 375 994
- DE-A- 2 638 320
- GB-A- 723 017
- US-A- 2 279 160

## Beschreibung

Die vorliegende Erfindung betrifft einen hydraulischen Schwingungsdämpfer mit mindestens einem in einem Zylinder geradlinig beweglich geführten Kolben, einem relativ zu dem Zylinder um eine Rotationsachse verdrehbar gelagerten, in oszillierende Rotationsbewegungen versetzbaren Antriebselement sowie einem die Rotationsbewegungen des Antriebselementes in die geradlinigen Bewegungen des Kolbens umsetzenden Übertragungsglied.

Bei Schwingungsdämpfern dieses Typs, auch Rotations- oder Hebeldämpfer genannt, werden entweder oszillierende, geradlinige Bewegungen einer zu dämpfenden Masse, beispielsweise einer Fahrzeugachse, zunächst über einen schwenkbeweglichen Betätigungshebel in oszillierende Rotationsbewegungen des Antriebselementes umgeformt, oder das Antriebselement wird unmittelbar mit oszillierenden Rotationsbewegungen einer zu dämpfenden Masse beaufschlagt. Ein Übertragungsglied setzt dann diese Rotationsbewegungen in geradlinige Hin- und Herbewegungen des Kolbens um, wodurch ein Hydraulikmedium durch mindestens ein Dämpfungsventil gedrängt wird, welches durch Drosselung der Hydraulikströmung die Schwingungsenergie in Wärme umwandelt und damit die Schwingungen dämpft.

Aus der BE-A-3 75 994 ist ein Schwingungsdämpfer bekannt, der im Prinzip aus zwei parallelen, in einem bestimmten Abstand voneinander angeordneten Zylindern besteht, in denen jeweils ein Kolben verschiebbar geführt ist. Im zwischen den voneinander beabstandeten Zylindern liegenden Bereich ist als Übertragungsglied ein mit einem Hebel verbundenes Zahnrad angeordnet, welches auf seinen diametral gegenüberliegenden Seiten jeweils durch eine seitliche Zylinderöffnung hindurch in jeweils eine Verzahnung eingreift, wobei jede dieser Verzahnungen unmittelbar in der Seiten- bzw. Umfangsfläche des jeweiligen Kolbens gebildet ist. Jeder Kolben unterteilt den zugehörigen Zylinder in zwei volumenveränderliche, mit Hydraulikmedium gefüllte Arbeitsräume, so daß hier zwangsläufig insgesamt vier volumenveränderliche Arbeitsräume vorhanden und auch erforderlich sind. Denn einerseits sind die dem jeweiligen Kolben zugeordneten Arbeitsräume über eine mit einem Kugelventil (Rückschlagventil) ausgestattete Kolben-Längsöffnung verbunden, und andererseits sind jeweils die beiden auf der gleichen Seite der Kolben liegenden Arbeitsräume der beiden Zylinder über eine Zylinder-Verbindung hydraulisch verbunden. Hierbei ist in jeder Verbindung ein "Dämpfungsventil" in Form einer Stellschraube vorgesehen. Bei diesem bekannten Dämpfer wird das Hydraulikmedium in der einen Bewegungsrichtung des Hebels und der Kolben aufgrund der dann geschlossenen Kugelventile jeweils von einem Arbeitsraum des einen Zylinders über eine der Zylinder-Verbindungen in den anderen Arbeitsraum des anderen Zylinders verdrängt, wodurch in dieser Bewegungsrichtung eine Dämpfung erreicht wird. In der anderen Bewegungsrichtung öffnen aber beide Kugelventile in den Längsöffnungen der Kolben, so daß das Hydraulikmedium dann im wesentlichen ungedämpft jeweils innerhalb desselben Zylinders über die jeweilige Kolben-Längsöffnung vom einen in den anderen Arbeitsraum zurückströmt. Bei einem solchen Dämpfer tritt nun das folgende gravierende Problem auf. Einerseits müssen alle Arbeitsräume und die Zylinderverbindungen stets vollständig mit Hydraulikmedium gefüllt sein, um überhaupt eine Dämpfungswirkung zu erreichen, denn eventuelle Ölverluste und ein dadurch bewirktes Eindringen von Luft führen zwangsläufig dazu, daß der Dämpfer funktionsunfähig wird, da bereits ein geringes im System eingeschlossenes Luftvolumen eine pneumatische Feder bildet, die zu einem Dämpfungskraftverlust bzw. zu einem ungedämpften, federnden Bewegungsbereich (Bewegungsspiel) führt. Andererseits ist bei der vollständigen Hydraulikfüllung aber problematisch, daß das Hydraulikmedium sich bei Strömungen zwangsläufig aufgrund von "innerer Reibung" erwärmt und somit auch im Volumen ausdehnt. Bedingt durch die Inkompressibilität des Hydraulikmediums kann hieraus eine solch große Erhöhung des inneren Druckes innerhalb des Dämpfers resultieren, daß der Dämpfer diesem erhöhten Druck nicht mehr standhält, wodurch der Dämpfer dann aber unbrauchbar wird, und zwar entweder dadurch, daß er vor allem im Bereich der Kolbendichtungen undicht wird und dadurch Öl verliert (Dichtungsverlust) oder indem es sogar zu einem Gehäusebruch ("Platzen") kommt. Weitere Nachteile dieses bekannten Schwingungsdämpfers bestehen darin, daß einerseits die Abdichtung zwischen den ölgefüllten Arbeitsräumen und dem zwischen den beiden Zylindern liegenden, das Zahnrad aufnehmenden, kein Öl enthaltenden Bereich sehr schwierig ist, und zwar wegen der für das Zahnrad und für dessen Eingriff in die jeweilige Kolben-Verzahnung erforderlichen Zylinderöffnung. Dieser bekannte Dämpfer eignet sich daher nur für relativ geringe Drücke und geringe Dämpfungskräfte. Andererseits ermöglicht diese bekannte Konstruktion auch nur außerordentlich kurze Kolbenwege, weil jeder Kolben mit seiner Länge stets die Zylinderöffnung zum Abdichten überdecken muß. Dies läßt sich anhand der einzigen Zeichnungsfigur leicht nachvollziehen. Schließlich ist noch von Nachteil, daß zur Gewährleistung einer langen Haltbarkeit, insbesondere Spielfreiheit, vor allem im Bereich des Zahnradantriebes Wartungsarbeiten (insbesondere Schmierung) erforderlich sind. Anderenfalls würde schon frühzeitig ein Spiel auftreten, wodurch der Dämpfer aber im Grunde unbrauchbar wird, da er dann ja völlig ungedämpfte Bewegungen der zu dämpfenden Masse zulassen würde.

Bei einer durch Vorbenutzung bekannten Ausführung eines Kolben-Hebeldämpfers besteht das Übertragungsglied aus einem auf dem Antriebselement sitzenden Exzenterhebel, der über ein pleuelstangenartiges Verbindungsstück gelenkig mit dem Kolben verbunden ist. Bei dieser Ausführung ist insbesondere der nur sehr kleine Ausschlagwinkel von Nachteil, da hierdurch der Kolben nur kurze Hubbewegungen ausführen kann. Zudem sind die mechanischen Belastungen in dem Exzenterhebel sowie auch in dem Kolben aufgrund einer außermittigen, Kippmomente erzeugenden Krafteinleitung sehr hoch. Daher ist auch der Betriebsdruck innerhalb des Hydrauliksystems und damit die Belastbarkeit des Dämpfers begrenzt.

Bei einem weiteren, aus "Lueger, Lexikon der Technik, Band 12, Seite 589" bekannten Dämpfer ist das Antriebselement seitlich am Außenumfang des Zylinders gelagert, und das als Mitnehmerhebel ausgebildete Übertragungsglied durchgreift eine Öffnung der Zylinderwandung und greift unmittelbar in eine seitliche Mitnehmervertiefung des Kolbens ein. Durch Verschwenkung eines mit dem Antriebselement verbundenen Betätigungshebels wird hierdurch auch der Mitnehmerhebel verschwenkt, wodurch der Kolben hin- und herbewegt wird. Es treten hierbei aber Probleme bei der Abdichtung der Zylinderöffnung auf, so daß sich auch diese Ausführung nur für geringe Drücke und Dämpfungskräfte eignet. Zudem ist diese Ausführung auch sehr kurzhubig.

Ebenfalls aus der genannten Literaturstelle in "Lueger" ist ferner ein Flügeldämpfer bekannt, bei dem durch die Rotationsbewegung des Antriebselementes ein Flügelkolben innerhalb eines Ölvolumens verschwenkt wird. Auch hier ist die Abdichtung schwierig, und die Druckhöhe ist begrenzt.

Der vorliegenden Erfindung liegt die Aufgabe zugrunde, ausgehend vom Stand der Technik einen Schwingungsdämpfer zu schaffen, der sich für hohe Drücke und damit auch hohe Dämpfungskräfte sowie auch für lange Dämpfungswege eignet, wobei zudem auch eine lange und zuverlässige Gebrauchstüchtigkeit erreichbar sein soll.

Erfindungsgemäß wird dies durch die Merkmale des Patentanspruchs 1 erreicht. Vorteilhafte Weiterbildungen der Erfindung sind in den abhängigen Ansprüchen enthalten.

Hierbei ist hervorzuheben, daß erfindungsgemäß jeder Kolben seinen zugehörigen Arbeitsraum von einer Gehäusekammer trennt, die ebenfalls mit Hydraulikmedium gefüllt sowie mit mindestens einem unter Vorspanndruck stehenden Hydraulik-Speicher verbunden ist. Ferner ist erfindungsgemäß jeder Arbeitsraum mit der (vorzugsweise gleichen, einheitlichen) Gehäusekammer über eine Ventilanordnung so verbunden, daß - beispielsweise wärmeausdehnungsbedingte - Ausgleichsströmungen des Hydraulikmediums möglich sind, die dann von dem Hydraulikspeicher jeweils "kompensiert" werden.

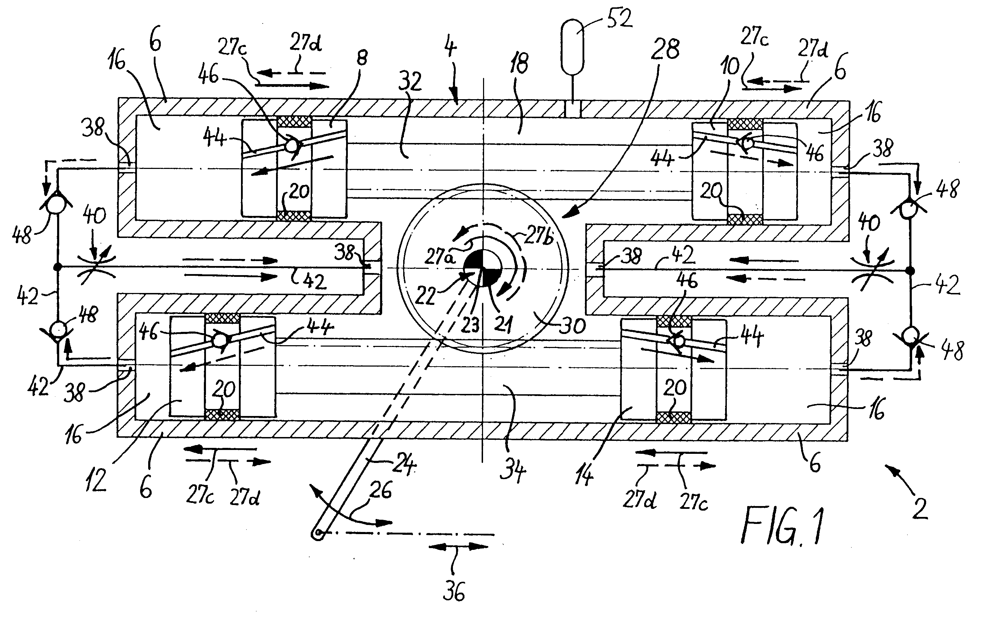

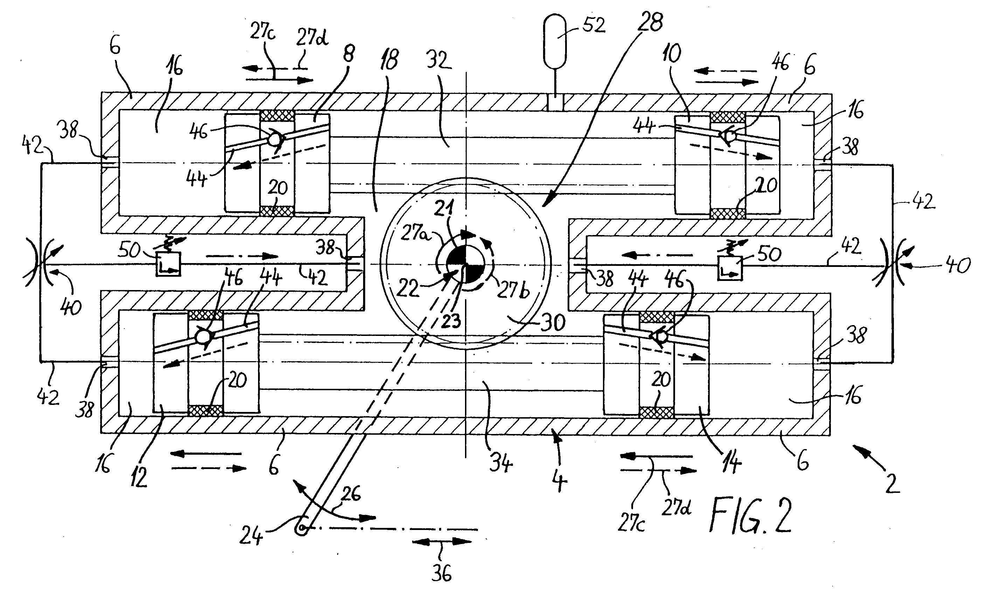

Durch die Erfindung wird eine außerordentlich hohe Gebrauchstüchtigkeit des Dämpfers über einen sehr langen Zeitraum hinweg erreicht. Einerseits werden eventuelle, druckbedingte Ölverluste jeweils in den "Entspannungsphasen" (bei Volumenvergrößerung des jeweiligen Arbeitsraumes) wieder ausgeglichen, indem der mit der Gehäusekammer verbundene Hydraulikspeicher durch seine Druck-Vorspannung dafür sorgt, daß in den jeweiligen Arbeitsraum über die Ventilanordnung Hydrauliköl "nachgefüllt" wird ("erste Ausgleichsströmung"). Andererseits nimmt der Speicher auch wärmebedingte Volumenausdehnungen des Hydraulikmediums auf ("zweite Ausgleichsströmung"). Hierbei ist es vorteilhaft, daß die Gehäusekammer im Volumen bei Kolbenbewegungen stets konstant bleibt, denn hierdurch braucht der Speicher lediglich zur "Kompensation" der jeweiligen Ausgleichsströmung(en) ausgelegt zu sein, denn die eigentliche "Dämpfungsströmung" erfolgt stets zwischen den (jeweils) zwei gegensinnig volumenveränderlichen Arbeitsräumen (entweder direkt (vgl. Fig. 2) oder mittelbar über die Gehäusekammer (vgl. Fig. 1)). Darüber hinaus ist in diesem Zusammenhang zu erwähnen, daß durch die erfindungsgemäß in der Verbindung zwischen dem jeweiligen Arbeitsraum und der Gehäusekammer angeordnete "Ventilanordnung" jeweils vermieden wird, daß der Dämpfer in seiner "aktiven Phase" (Verdrängungsphase bei Volumenverkleinerung des jeweiligen Arbeitsraumes) unmittelbar gegen den - als (pneumatische) Feder wirkenden - Hydraulikspeicher arbeitet. Dies bedeutet, daß der erfindungsgemäße Dämpfer - trotz des Hydraulikspeichers - ein außerordentlich "straffes", d.h. heißt spiel- und federfreies Dämpfungsverhalten besitzt, und dies vorteilhafterweise sogar über eine sehr lange Gebrauchszeit hinweg.

Die erfindungsgemäße Ausgestaltung führt zudem noch zu weiteren entscheidenden Vorteilen. Aufgrund der erfindungsgemäßen Zahnstange(n) ist einer Drehung des Zahnrades praktisch keine Grenze gesetzt, so daß auch die Hublänge des über die Zahnstange verschiebbaren Kolbens - bei entsprechender Länge der Zahnstange(n) - nahezu unbegrenzt ist. Die Abdichtung ist durch die Erfindung problemlos. Einerseits weist zur Abdichtung zwischen dem bzw. jedem Arbeitsraum und der - vorzugsweise den Zahnradantrieb aufnehmenden - Gehäusekammer jeder Kolben vorzugsweise eine Umfangsdichtung auf. Andererseits ist auch die Abdichtung des Gehäuses nach außen leicht zu realisieren, da nur eine Antriebswelle im Bereich einer Gehäusedurchführung abgedichtet zu werden braucht, beispielsweise über Wellendichtringe. Aufgrund der bevorzugten Anordnung des Zahnradantriebes innerhalb der mit Hydraulikmedium (Öl) gefüllten Gehäusekammer wird vorteilhafterweise praktisch "automatisch" eine effektive Schmierung des Antriebs erreicht, die zu einer langen Haltbarkeit auch ohne besondere Wartungsarbeiten führt. Dies ist gerade bei solchen gattungsgemäßen Dämpfern von ganz wesentlicher Bedeutung, da ja ein geringes Spiel praktisch dazu führen würde, daß der Dämpfer unbrauchbar werden würde.

Die Erfindung hat zudem den weiteren wesentlichen Vorteil, daß mehrere, vorzugsweise vier Kolben in dem gleichen Gehäuse, d.h. in entsprechenden mit dem Gehäuse verbundenen Zylindern, angeordnet und über das gleiche Zahnrad angetrieben werden können. Hierbei werden die Kolben - hinsichtlich der jeweils gleichzeitig auftretenden Volumenänderungen der zugehörigen Arbeitsräume - paarweise gegensinnig angetrieben. Dieser gegensinnige Antrieb kann dadurch realisiert werden, daß zwei Kolben an den Enden der gleichen Zahnstange angeordnet sind, wobei dann die entsprechenden Zylinder gleichachsig in einander abgekehrte Richtungen weisen. Erfindungsgemäß kann alternativ oder zusätzlich auch eine weitere Zahnstange parallel zu der ersten Zahnstange in dem Gehäuse angeordnet sein, wobei diese Zahnstange einendig mit einem zu dem ersten Kolben gegenläufigen Kolben verbunden sein kann.

In einer besonders vorteilhaften Ausführungsform der Erfindung ist das Gehäuse im Längsschnitt H-förmig mit vier Zylindern ausgebildet, in denen jeweils ein Kolben geführt ist. Insgesamt sind folglich vier Kolben vorhanden, wobei diese Kolben jeweils paarweise über eine von zwei parallelen Zahnstangen verbunden sind. Die beiden Zahnstangen stehen auf diametral gegenüberliegenden Seiten des Zahnrades mit diesem in Verbindung, so daß sie bei Drehung des Zahnrades in entgegengesetzten Richtungen in dem Gehäuse verschoben werden und hierbei die Kolben entsprechend antreiben. Diese Ausführungensform zeichnet sich durch einen besonders großen Druck- und Dämpfungskraftbereich aus, da - hinsichtlich der jeweils gleichzeitig auftretenden Volumenänderungen der zugehörigen Arbeitsräume - zweimal zwei gegenläufige bzw. zweimal zwei gleichläufige Kolben vorgesehen sind.

Die von den Kolben bewirkte Strömung des Hydraulikmediums wird erfindungsgemäß über mindestens ein vorzugsweise einstellbares Dämpfungsventil gedrosselt. Hierzu kann jeder Kolben einen Kanal aufweisen, der den volumenveränderlichen Arbeitsraum mit der bevorzugt den Zahnradantrieb aufnehmenden und erfindungsgemäß ja ebenfalls mit Hydraulikmedium gefüllten Gehäusekammer verbindet, wobei in diesem Kanal ein Dämpfungsventil angeordnet ist. Besonders vorteilhaft ist es jedoch, wenn der erfindungsgemäße Schwingungsdämpfer für jeden Arbeitsraum sowie für die Gehäusekammer Anschlußöffnungen zum Anschluß von externen Leitungsverbindungen aufweist, die zu mindestens einem ebenfalls extern angeordneten Dämpfungsventil führen. Bei dieser Ausführung ist die Dämpfungscharakteristik vorteilhafterweise äußerst variabel, da externe Dämpfungsventile sehr leicht einstellbar ausgeführt werden können. Insbesondere bei der erfindungsgemäßen Ausbildung mit vier Kolben bzw. vier Arbeitsräumen können jeweils zwei gegenläufig volumenveränderliche Arbeitsräume über ein Dämpfungsventil zusammengeschaltet werden. Hierfür gibt es mehrere Möglichkeiten, die in der folgenden Figurenbeschreibung noch näher erläutert werden sollen.

In einer weiteren, besonders vorteilhaften Ausführungsform der Erfindung besitzt der Schwingungsdämpfer ein Gehäuse, welches in einer senkrecht zur Rotationsachse des Antriebselementes bzw. des Zahnrades angeordneten Ebene in zwei Gehäuseteile unterteilt ist. Dabei sind die beiden Gehäuseteile gegeneinander verdrehbar sowie abgedichtet miteinander verbunden. In dem ersten Gehäuseteil sind der erfindungsgemäße Zahnradantrieb, d.h. das Zahnrad und die Zahnstange(n), sowie auch die Kolben untergebracht, und das zweite Gehäuseteil bildet praktisch eine Art Gehäusedeckel sowie vorteilhafterweise gleichzeitig auch das Antriebselement, wozu es drehmomentschlüssig inbesondere über elastische Verbindungselemente mit dem in dem ersten Gehäuseteil drehbar gelagerten Zahnrad verbunden ist. Die elastischen Verbindungselemente, z.B. sogenannte "Gummipuffer" oder dergleichen, gleichen vorteilhafterweise einerseits Fertigungstoleranzen aus, und andererseits dienen sie auch zum Spielausgleich, so daß stets eine drehmomentschlüssige Verbindung zwischen dem Antriebselement und den Kolben gewährleistet ist. Hierdurch werden auch kleinste Bewegungen eines zu dämpfenden Bauteils stets zuverlässig gedämpft. Zudem bewirken die elastischen Verbindungselemente selbst noch eine zusätzliche Dämpfung, so daß die zwischen dem Antriebselement bzw. dem zweiten Gehäuseteil und dem Zahnrad vorhandenen Verbindungen, wie insbesondere Schraubverbindungen, auch gegen stoßartige (Scher-) Belastungen geschützt werden. Diese zuletzt beschriebene Ausführung des erfindungsgemäßen Schwingungsdämpfers eignet sich besonders für solche Anwendungsfälle, in denen zwei Bauteile gelenkig miteinander zu verbinden sind, da diese Verbindung ausschließlich über den erfindungsgemäßen Schwingungsdämpfer erfolgen kann. Es erübrigen sich weitere Lagerstellen, da die internen Lagerungen des Schwingungsdämpfers vorteilhafterweise so ausgebildet sind, daß sie Axial- sowie Radialkräfte aufnehmen können. Somit dient der erfindungsgemäße Dämpfer gleichzeitig auch als Gelenkverbinderelement, wozu lediglich die zu verbindenden Bauteile mit jeweils einem der Gehäuseteile verbunden zu werden brauchen.

Weitere vorteilhafte Ausgestaltungsmerkmale der Erfindung sind in Unteransprüchen sowie der folgenden Beschreibung enthalten.

Anhand der Zeichnung soll im folgenden die Erfindung beispielhaft näher erläutert werden. Dabei zeigen:
- Fig. 1: eine vereinfachte Längsschnittdarstellung einer ersten Ausführungsform eines erfindungsgemäßen Schwingungsdämpfers mit einer ersten Möglichkeit für eine äußere Dämpfungsventil-Beschaltung,
- Fig. 2: eine Längsschnittdarstellung analog zu Fig. 1 mit einer zweiten Möglichkeit für eine äußere Dämpfungsventil-Beschaltung,
- Fig. 3: einen vereinfachten Längsschnitt durch eine zweite Ausführungsform des erfindungsgemäßen Schwingungsdämpfers ohne äußere Beschaltung und
- Fig. 4: einen gegenüber Fig. 3 vergrößerten sowie etwas detaillierteren Schnitt längs der Linie IV-IV in Fig. 3.

In den verschiedenen Zeichnungen sind gleiche bzw. gleichwirkende Teile und Komponenten stets mit den gleichen Bezugsziffern bezeichnet.

Ein erfindungsgemäßer Schwingungsdämpfer 2 besitzt in den dargestellten, bevorzugten Ausführungsformen der Erfindung ein Gehäuse 4 mit vier Zylindern 6, wobei das Gehäuse 4 gemäß dem dargestellten Längsschnitt H-förmig ausgebildet ist und die Zylinder 6 jeweils paarweise in den zueinander parallelen H-Schenkeln angeordnet sind.In jedem Zylinder 6 ist ein Kolben 8, 10, 12, 14 geradlinig beweglich geführt, wobei jeder Kolben 8 bis 14 einen volumenveränderlichen Arbeitsraum 16 von einer im Bereich des Verbindungssteges der H-Form des Gehäuses 4 gebildeten Gehäusekammer 18 trennt. Zur Abdichtung des Zylinderringspaltes besitzt jeder Kolben 8 bis 14 mindestens einen Kolbenring 20.

Gemäß Fig. 1 und 2 ist im Bereich der Gehäusekammer 18 in dem Gehäuse 4 ein als Welle 21 ausgebildetes Antriebselement 22 um eine Rotationsachse 23 drehbar gelagert, welches zumindest einendig abgedichtet nach außen geführt ist und hier mit einem außerhalb des Gehäuses 4 angeordneten Betätigungshebel 24 verbunden ist. Schwenkbewegungen des Hebels 24 in Doppelpfeilrichtung 26 bewirken hierdurch Rotationsbewegungen des Antriebselementes 22, was durch den voll gezeichneten Pfeil 27a sowie den gestrichelten Pfeil 27b veranschaulicht werden soll. Diese Rotationsbewegungen des Antriebselementes 22 werden über ein Übertragungsglied in die geradlinigen Bewegungen der Kolben 8 bis 14 in Richtung der voll gezeichneten Pfeile 27c bzw. der gestrichelten Pfeile 27d umgesetzt.

Dieses Übertragungsglied ist nun erfindungsgemäß als Zahnradantrieb 28 ausgebildet, der aus einem drehmomentschlüssig mit dem Antriebselement 22 verbundenen Zahnrad 30 sowie aus - im dargestellten, bevorzugten Beispiel - zwei Zahnstangen 32, 34 besteht, wobei jeweils zwei der vier Kolben 8 bis 14 über eine der als Kolbenstangen wirkenden Zahnstangen 32, 34 verbunden sind, d.h. die Kolben 8 und 10 sind über die Zahnstange 32 und die Kolben 12 und 14 über die Zahnstange 34 verbunden. Dabei sind die Zahnstangen 32, 34 mit den zugehörigen Kolben parallel zueinander angeordnet und stehen auf diametral gegenüberliegenden Seiten des Zahnrades 30 mit diesem in Eingriff. Durch diese erfindungsgemäße Ausgestaltung bewegen sich die Kolben hinsichtlich der Volumenänderung der zugeordneten Arbeitsräume 16 wie folgt:
a) gleichsinnig: die jeweils diagonal gegenüberliegenden Kolben 8 und 14 sowie 10 und 12,
b) gegensinnig: einerseits die jeweils über die Zahnstangen 32 bzw. 34 miteinander verbundenen Kolben 8 und 10 sowie 12 und 14 und andererseits die jeweils "nebeneinander" angeordneten Kolben 8 und 12 sowie 10 und 14.

Die Arbeitsräume 16 und die Gehäusekammer 18 sind vollständig mit einem Hydraulikmedium gefüllt, welches aufgrund der Kolbenbewegungen durch mindestens ein Dämpfungsventil gedrängt wird, wodurch eine Dämpfung der Bewegungen des Antriebselementes 22 bzw. einer nicht dargestellten, z.B. über den Hebel 26 angreifenden und sich oszillierend in Doppelpfeilrichtung 36 bewegenden Masse bewirkt wird.

In den dargestellten Ausführungsformen der Erfindung mündet in jeden Arbeitsraum 16 und in die Gehäusekammer 18 jeweils mindestens eine Anschlußöffnung 38 zum Anschluß von externen, zu vorzugsweise einstellbaren Dämpfungsventilen 40 führenden Leitungsverbindungen 42. Dabei besitzt vorzugsweise jeder Kolben 8 bis 14 einen den zugehörigen Arbeitsraum 16 mit der Gehäusekammer 18 verbindenden Kanal 44, in dem ein Rückschlagventil 46 derart angeordnet ist, daß über den Kanal 44 eine Hydraulik-Strömung aus der Gehäusekammer 18 in den Arbeitsraum 16 möglich ist, eine umgekehrte Strömung jedoch gesperrt wird. Bei dieser erfindungsgemäßen Ausgestaltung des Schwingungsdämpfers 2 gibt es nun vorteilhafterweise mehrere Möglichkeiten für eine äußere "Dämpfungsventil-Beschaltung", von denen beispielhaft zwei Möglichkeiten in Fig. 1 und Fig. 2 dargestellt sind, auf die jedoch die Erfindung keinesfalls beschränkt ist.

In der Ausführung nach Fig. 1 ist jeder Arbeitsraum 16 über die entsprechende Anschlußöffnung 38 und eine Leitungsverbindung 42 zunächst mit einem Rückschlagventil 48 verbunden, wobei jeweils die den Arbeitsräumen 16 von zwei gegenläufig arbeitenden Kolben - hier Kolben 8 und 12 einerseits und Kolben 10 und 14 andererseits, jedoch können ebenfalls die Arbeitsräume 16 der Kolben 8 und 10 sowie 12 und 14 in analoger Weise zusammengeschaltet sein - zugeordneten Rückschlagventile 48 miteinander verbunden sind. Dabei sind diese miteinander verbundenen Rückschlagventile 48 jeweils so angeordnet, daß sie eine Strömung aus dem Arbeitsraum 16 heraus ermöglichen und eine Strömung in umgekehrter Richtung sperren. Der Verbindungspunkt zwischen den beiden miteinander verbundenen Rückschlagventilen 48 ist dann jeweils über ein Dämpfungsventil 40 und die bzw. eine Anschlußöffnung 38 mit der Gehäusekammer 18 verbunden. Bei dieser Ausführung werden durch die Kolbenbewegungen Strömungen in Richtung der eingezeichneten Pfeile bewirkt, d.h. jeweils bei Verkleinerung des Volumens des Arbeitsraumes 16 (Komprimierung) strömt Hydraulikmedium aus diesem heraus über das externe Rückschlagventil 48 und das Dämpfungsventil 40 in die Gehäusekammer 18 und bei der anschließenden Vergrößerung des Volumens des Arbeitsraumes 16 (Entspannung) aus der Gehäusekammer 18 über den Kanal 44 und das sich dann öffnende Rückschlagventil 46 des jeweiligen Kolbens zurück in den Arbeitsraum 16.

Bei der Ausführungsform nach Fig. 2 sind jeweils zwei Arbeitsräume 16 von zwei gegenläufig arbeitenden Kolben - hier der Kolben 8 und 12 einerseits und der Kolben 10 und 14 andererseits, jedoch können auch die Arbeitsräume 16 der Kolben 8 und 10 sowie 12 und 14 entsprechend zusammengeschaltet sein - über ein vorzugsweise einstellbares Dämpfungsventil 40 miteinander verbunden. Das Dämpfungsmedium wird hier folglich jeweils über das Dämpfungsventil 40 zwischen den zusammengeschalteten Arbeitsräumen 16 hin- und hergepumpt. Folglich liegt bei dieser Ausführungform die Gehäusekammer 18 - im Gegensatz zum Ausführungsbeispiel nach Fig. 1 - nicht in dem "normalen" Strömungsweg des Hydraulikmediums, so daß sich eigentlich auch die Kanäle 44 und die Rückschlagventile 46 der Kolben erübrigen könnten. Allerdings sind diese auch bei dieser Ausführung mit Vorteil vorhanden, da sich das Hydraulikmedium ja aufgrund der Drosselung in den Dämpfungsventilen 40 erwärmt und daher ausdehnt. Um diese wärmebedingte Volumenänderung des Hydraulikmediums auszugleichen, ist hier erfindungsgemäß jeder äußere Hydraulikweg - im dargestellten Beispiel jedes Dämpfungsventil 40 - über ein vorzugsweise einstellbares Überdruckventil 50 mit der Gehäusekammer 18 verbunden. Hierdurch wird bei Wärmeausdehnung ein Teil des Hydraulikmediums über das jeweilige Überdruckventil 50 in die Gehäusekammer 18 abgeleitet (siehe die strichpunktiert eingezeichneten Pfeile), und nach Abkühlen wirken die Rückschlagventile der Kolben als sogenannte "Nachschnüffelventile", über die das entsprechende Volumen des Hydraulikmediums wieder in den "äußeren Kreislauf", d.h. in den jeweiligen Arbeitsraum 16, "nachgefüllt" wird. Da zudem in den Arbeitsräumen 16 des erfindungsgemäßen Schwingungsdämpfers 2 sehr hohe Drücke von 300 bar und mehr erreicht werden, kann es über die Kolbenringe 20 zu Ölverlusten kommen, indem Hydraulikmedium durch den Ringspalt zwischen den Kolbenringen 20 und den Zylindern 6 in die Gehäusekammer 18 verdrängt wird. In der Entspannungsphase, d.h. während der zyklischen Volumenvergrößerung des jeweiligen Arbeitsraumes 16, wirkt dann das Rückschlagventil 46 wiederum als "Nachschnüffelventil", indem das entsprechende Volumen aus der Gehäusekammer 18 über den Kanal 44 und das Rückschlagventil 46 des jeweiligen Kolbens zurück in den Arbeitsraum 16 gelangt. Die in der Ausführungsform nach Fig. 2 auftretende "Ausgleichsströmung" über die Kanäle 44 soll durch die kurzgestrichelt eingezeichneten Pfeile angedeutet werden.

In beiden dargestellten Ausführungsformen nach Fig. 1 und 2 ist erfindungsgemäß vorgesehen, daß mit der Gehäusekammer 18 mindestens ein Hydraulikspeicher 52 verbunden ist, der das Hydraulikmedium insbesondere mittels einer pneumatischen Feder unter einen Vorspanndruck setzt. Dieser Hydraulikspeicher 52 bewirkt einerseits, daß der gesamte Schwingungsdämpfer 2 stets vollständig mit Hydraulikmedium gefüllt ist. Andererseits dient er vorzugsweise auch zur Aufnahme der oben beschriebenen "Ausgleichsströmung" bei wärmebedingten Volumenausdehnungen des Hydraulikmediums.

Die Lagerung des Zahnrades 30 bzw. des Antriebselementes 22 ist erfindungsgemäß so gestaltet, daß Radial- und Axialkräfte aufnommen werden können. Hierdurch wird es vorteilhafterweise möglich, zwei sich zueinander drehende Bauteile beweglich und geführt miteinander zu verbinden, ohne daß weitere Lagerstellen erforderlich sind.

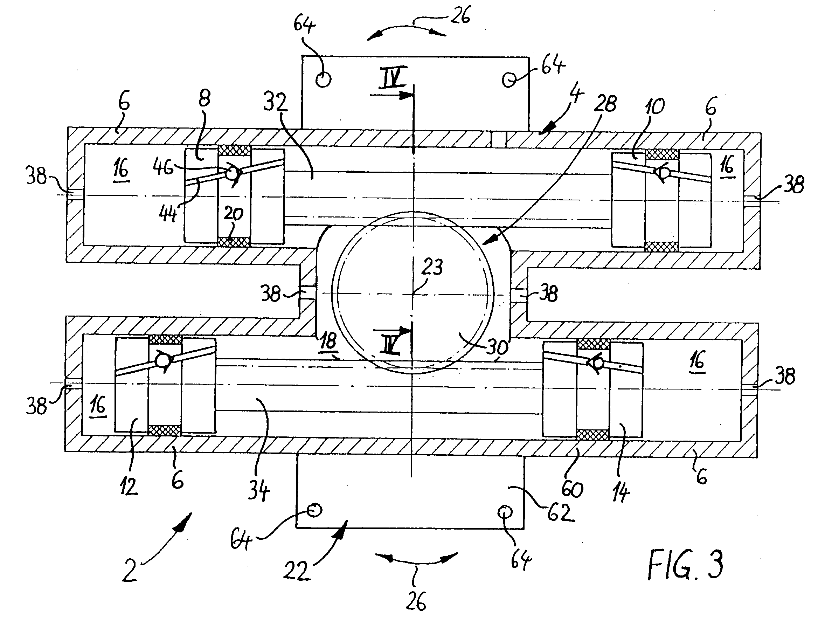

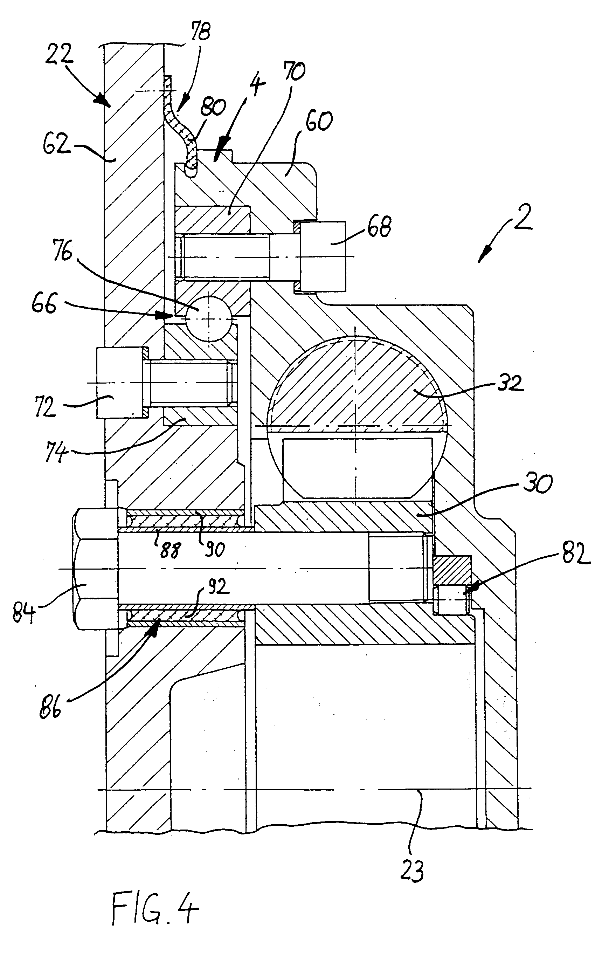

Für derartige Anwendungsfälle eignet sich nun insbesondere die in den Fig. 3 und 4 veranschaulichte Ausführungsform des erfindungsgemäßen Schwingungsdämpfers 2. Hier sind mit den Fig. 1 und 2 übereinstimmende bzw. analoge Teile mit gleichen Bezugsziffern bezeichnet und werden daher nicht nochmals beschrieben. Vielmehr sollen im folgenden lediglich die Unterschiede genauer erläutert werden.

Gemäß Fig. 3 und 4 ist das Gehäuse 4 erfindungsgemäß in einer zu der Rotationsachse 23 senkrechten Ebene in zwei Gehäuseteile 60 und 62 unterteilt. Diese beiden Gehäuseteile 60 und 62 sind gegeneinander um die Rotationsachse 23 verdrehbar sowie abgedichtet miteinander verbunden. In dem ersten Gehäuseteil 60 ist das Zahnrad 30 drehbar gelagert, und das zweite Gehäuseteil 62 ist mit dem Zahnrad 30 drehmomentschlüssig verbunden, so daß in dieser Ausführung das Antriebselement 22 von dem zweiten Gehäuseteil 62 gebildet wird. Durch Verdrehen bzw. Verschwenken des zweiten Gehäuseteils 62 in Richtung der Doppelpfeile 26 relativ zu dem ersten Gehäuseteil 60 werden analog zur Ausführung nach Fig. 1 und 2 die Kolben über den Zahnradantrieb 28 in den Zylindern 6 bewegt. Zur Montage kann das zweite Gehäuseteil 62 beispielsweise in Fig. 3 erkennbare Montagelöcher 64 besitzen, und auch das erste Gehäuseteil 60 weist entsprechende, jedoch nicht dargestellte Befestigungsmittel auf. Die hier nicht dargestellte äußere Beschaltung kann der Fig. 1 oder der Fig. 2 entsprechen.

Gemäß Fig. 4 sind die beiden Gehäuseteile 60 und 62 vorzugsweise über ein Drehlager 66, im dargestellten Beispiel ein Wälzlager (Kugellager), miteinander verbunden. Anstelle des Wälzlagers kann jedoch auch ein Gleitlager vorgesehen sein. Wesentlich ist hierbei allerdings, daß das Drehlager 66 sowohl axiale als auch radiale Kräfte aufnehmen kann. Wie dargestellt, ist beispielsweise das erste Gehäuseteil 60 über Schrauben 68 mit einem Lager-Außenring 70 des Drehlagers 66 verbunden, während das zweite Gehäuseteil 62 über Schrauben 72 mit einem Lager-Innenring 74 verbunden ist. Zwischen dem Außenring 70 und dem Innenring 74 laufen Wälzkörper 76, z.B. Kugeln.

Zwischen den Gehäuseteilen 60, 62 ist zudem eine Umfangsdichtung 78 angeordnet, die im dargestellten Beispiel als ringförmige, die Rotationsachse 23 konzentrisch umschließende Dichtlippe 80 ausgebildet ist, die mit ihrem äußeren Umfangsrand dichtend an dem zweiten Gehäuseteil 62 befestigt ist und mit ihrem inneren Umfangsrand dichtend derart an dem ersten Gehäuseteil 60 anliegt, daß bei relativer Verdrehung der Gehäuseteile 60, 62 die Dichtlippe 80 auf dem ersten Gehäuseteil 60 gleitet, dabei jedoch abdichtet. Alternativ hierzu kann jedoch auch im Spalt zwischen den Gehäuseteilen 60, 62 ein üblicher Dichtring angeordnet sein (nicht dargestellt).

Wie weiterhin in Fig. 4 erkennbar ist, ist das Zahnrad 30 in dem ersten Gehäuseteil 60 ebenfalls über ein Drehlager 82 drehbar gelagert. Auch hier kann - wie dargestellt - ein Wälzlager (Rollenlager) oder aber ein Gleitlager (nicht dargestellt) verwendet werden.

Das zweite Gehäuseteil 62 ist vorzugsweise über Schraubverbindungen mit dem Zahnrad 30 verbunden. Hierzu erstrecken sich mehrere, gleichmäßig über einen zur Rotationsachse 23 konzentrischen Kreis verteilt angeordnete Schrauben 84 in zu der Rotationsachse 23 paralleler Richtung durch Durchgangslöcher des zweiten Gehäuseteils 62 hindurch und greifen in jeweils eine Gewindebohrung des Zahnrades 30 ein. Hierbei ist es besonders vorteilhaft, wenn das Antriebselement 22 bzw. das zweite Gehäuseteil 62 über elastisch verformbare Verbindungselemente 86 mit dem Zahnrad 30 verbunden ist. Jedes dieser elastisch verformbaren Verbindungselemente 86 besteht vorzugsweise aus zwei zueinander konzentrischen Hülsen 88 und 90, die über eine zwischen ihnen liegende Schicht 92 aus einem elastomeren Material verbunden sind. Hierbei ist die innere Hülse 88 jeweils über die Schraube 84 starr mit dem Zahnrad 30 verbunden. Die äußere Hülse 90 sitzt fest in dem entsprechenden Durchgangsloch des Antriebselementes 22 bzw. des zweiten Gehäuseteils 62. Durch die elastischen Verbindungselemente wird vorteilhafterweise ein Ausgleich von Fertigungstoleranzen sowie von Spiel erreicht, wie dies eingangs bereits erläutert wurde.

Die Erfindung ist keineswegs auf die dargestellten und beschriebenen Ausführungsbeispiele beschränkt, sondern umfaßt auch alle im Sinne der Erfindung wirkenden Ausführungsformen. So sind insbesondere auch Schwingungsdämpfer-Ausführungen mit nur zwei oder mit mehr als vier Kolben möglich. Weiterhin liegt es im Rahmen der Erfindung, mindestens zwei erfindungsgemäße Schwingungsdämpfer 2 mit einem gemeinsamen Antriebselement 22, insbesondere eine verlängerte Welle 21, neben- bzw. übereinander anzuordnen, wobei dann das Antriebselement 22 bzw. die Welle 21 für jeden Schwingungsdämpfer 2 ein Zahnrad 30 trägt. Durch diese Mehrfachanordordnung kann erfindungsgemäß die Dämpfungskraft und die Belastbarkeit noch erheblich gesteigert werden.

## Patentansprüche

1. Hydraulischer Schwingungsdämpfer mit mindestens zwei jeweils in einem Zylinder (6) geradlinig beweglich geführten Kolben (8 bis 14), einem relativ zu dem Zylinder (6) um eine Rotationsachse (23) drehbar gelagerten, in oszillierende Rotationsbewegungen versetzbaren Antriebselement (22), einem die Rotationsbewegungen des Antriebselementes (22) in die geradlinigen Bewegungen des Kolbens (8 bis 14) umsetzenden Übertragungsglied sowie mit mindestens zwei durch die Kolbenbewegungen jeweils gegensinnig volumenveränderlichen, mit einem Hydraulikmedium gefüllten Arbeitsräumen (16), wobei zur Dämpfung das Hydraulikmedium bei Kolbenbewegungen über mindestens ein Dämpfungsventil (40) strömt, und wobei das Übertragungsglied als Zahnradantrieb (28) mit einem drehmomentschlüssig mit dem Antriebselement (22) verbundenen Zahnrad (30) und mindestens einer mit den Kolben (8 bis 14) verbundenen und mit dem Zahnrad (30) in Eingriff stehenden Zahnstange (32, 34) ausgebildet ist, wobei jeder Kolben (8 bis 14) seinen zugehörigen Arbeitsraum (16) von einer ebenfalls mit Hydraulikmedium gefüllten und mit mindestens einem unter einem Vorspanndruck stehenden Hydraulikspeicher (52) verbundenen Gehäusekammer (18) trennt und jeder Arbeitsraum (16) über eine Ausgleichsströmungen des Hydraulikmediums ermöglichende Ventilanordnung (46,40, 48; 46,40,50) mit der Gehäusekammer (18) verbunden ist.

2. Schwingungsdämpfer nach Anspruch 1,
**dadurch gekennzeichnet,** daß jeder Kolben (8 bis 14) seinen zugehörigen Arbeitsraum (16) von der gleichen, einheitlichen, bei Kolbenbewegungen im Volumen unveränderlichen und vorzugsweise den Zahnradantrieb (28) aufnehmenden Gehäusekammer (18) trennt.

3. Schwingungsdämpfer nach Anspruch 1 oder 2,
**dadurch gekennzeichnet,** daß jeder Kolben (8 bis 14) einen den zugehörigen Arbeitsraum (16) mit der Gehäusekammer (18) verbindenden Kanal (44) aufweist.

4. Schwingungsdämpfer nach Anspruch 3,
**dadurch gekennzeichnet,** daß in dem Kanal (44) jedes Kolbens (8 bis 14) ein Rückschlagventil (46) derart angeordnet ist, daß über den Kanal (44) eine Hydraulik-Strömung aus der Gehäusekammer (18) in den Arbeitsraum (16) möglich ist und eine umgekehrte Strömung gesperrt wird.

5. Schwingungsdämpfer nach Anspruch 3,
**dadurch gekennzeichnet,** daß in dem Kanal (44) jedes Kolbens (8 bis 14) ein Dämpfungsventil angeordnet ist.

6. Schwingungsdämpfer nach einem oder mehreren der Ansprüche 1 bis 5,
**dadurch gekennzeichnet,** daß in jeden Arbeitsraum (16) sowie vorzugsweise in die Gehäusekammer (18) jeweils mindestens eine Anschlußöffnung (38) zum Anschluß von externen, zu mindestens einem vorzugsweise einstellbaren Dämpfungsventil (40) führenden Leitungsverbindungen (42) mündet.

7. Schwingungsdämpfer nach einem oder mehreren der Ansprüche 1 bis 6,
**dadurch gekennzeichnet,** daß der bzw. jeder mit der Gehäusekammer (18) verbundene Hydraulikspeicher (52) unter pneumatischem Vorspanndruck steht.

8. Schwingungsdämpfer nach einem oder mehreren der Ansprüche 1 bis 7,
**dadurch gekennzeichnet,** daß die beiden hinsichtlich der Volumenänderungen der jeweils zugehörigen Arbeitsräume (16) gegensinnig angetriebenen Kolben (8,10; 12,14) gleichachsig an den Enden der gleichen Zahnstange (32; 34) angeordnet sind.

9. Schwingungsdämpfer nach einem oder mehreren der Ansprüche 1 bis 8,
**dadurch gekennzeichnet,** daß die beiden hinsichtlich der Volumenänderungen der jeweils zugehörigen Arbeitsräume (16) gegensinnig angetriebenen Kolben (8,12; 10,14) parallel zueinander geführt und mit jeweils einer von zwei Zahnstangen (32, 34) verbunden sind, die in diametral gegenüberliegenden Bereichen des Zahnrades (30) mit diesem in Eingriff stehen.

10. Schwingungsdämpfer nach einem oder mehreren der Ansprüche 1 bis 9,
**dadurch gekennzeichnet,** daß vier Kolben (8,10; 12,14) paarweise über eine von zwei parallelen Zahnstangen (32, 34) miteinander verbunden sind.

11. Schwingungsdämpfer nach einem oder mehreren der Ansprüche 1 bis 10,
**dadurch gekennzeichnet,** daß die die Kolben (8 bis 14) aufnehmenden Zylinder (6) mit einem gemeinsamen Gehäuse (4) verbunden sind, wobei das Gehäuse (4) insbesondere im Längsschnitt H-förmig mit vier jeweils einen von vier Kolben aufnehmenden Zylindern (6) ausgebildet ist.

12. Schwingungsdämpfer nach einem oder mehreren der Ansprüche 1 bis 11,
**dadurch gekennzeichnet,** daß das Antriebselement (22) als in dem Gehäuse (4) um die Rotationsachse (23) drehbar gelagerte Welle (21) ausgebildet ist, die zumindest einendig abgedichtet nach außen geführt ist und ein äußeres Betätigungselement, insbesondere einen Betätigungshebel (24) trägt.

13. Schwingungsdämpfer nach einem oder mehreren der Ansprüche 1 bis 11,
**dadurch gekennzeichnet,** daß das Gehäuse (4) in einer zu der Rotationsachse (23) senkrechten Ebene in zwei Gehäuseteile (60, 62) unterteilt ist, wobei die beiden Gehäuseteile (60, 62) gegeneinander um die Rotationsachse (23) verdrehbar sowie abgedichtet miteinander verbunden sind, und wobei in dem ersten Gehäuseteil (60) das Zahnrad (30) drehbar gelagert ist und das zweite Gehäuseteil (62) das Antriebselement (22) bildend mit dem Zahnrad (30) verbunden ist.

14. Schwingungsdämpfer nach einem oder mehreren der Ansprüche 1 bis 13,
**dadurch gekennzeichnet,** daß das Antriebselement (22) über elastisch verformbare Verbindungselemente (86) mit dem Zahnrad (30) verbunden ist.

## Claims

1. Hydraulic oscillation damper, having at least two pistons (8 to 14) which are each linearly movable in a cylinder (6), a drive element (22) which is mounted to be rotatable about an axis of rotation (23) relative to the cylinder (6) and can be set into oscillating rotary movements, a transmission element converting the rotary movements of the drive element (22) into the linear movements of the pistons (8 to 14), and having at least two work spaces (16) which are filled with a hydraulic medium and whereof the volumes are alterable in each case in opposite directions by the piston movements, for damping, the hydraulic medium flowing during piston movements through at least one damping valve (40), and the transmission element being constructed as a toothed wheel drive (28) having a toothed wheel (30) connected by torque engagement to the drive element (22), and at least one toothed rack (32, 34) which is connected to the pistons (8 to 14) and is in engagement with the toothed wheel (30), each piston (8 to 14) separating its associated work space (16) from a housing chamber (18) which is also filled with hydraulic medium and which is connected to at least one hydraulic store (52) which is under servo pressure and each work space (16) being connected to the housing chamber (18) by way of a valve arrangement (46, 40, 48; 46, 40, 50) enabling compensation flows of the hydraulic medium.

2. Oscillation damper according to Claim 1, characterized in that each piston (8 to 14) separates its associated work space (16) from the same unitary housing chamber (18) whereof the volume is unalterable during piston movements and which preferably receives the toothed wheel drive (28).

3. Oscillation damper according to Claim 1 or 2, characterized in that each piston (8 to 14) has a channel (44) connecting the associated work space (16) to the housing chamber (18).

4. Oscillation damper according to Claim 3, characterized in that a non-return valve (46) is arranged in the channel (44) of each piston (8 to 14) such that by way of the channel (44) a hydraulic flow from the housing chamber (18) into the work space (16) is possible and a return flow is blocked.

5. Oscillation damper according to Claim 3, characterized in that a damping valve is arranged in the channel (44) of each piston (8 to 14).

6. Oscillation damper according to one or more of Claims 1 to 5, characterized in that in each case at least one connection opening (38) for the connection of external line connections (42) leading to at least one preferably adjustable damping valve (40) opens into each work space (16) and preferably into the housing chamber (18).

7. Oscillation damper according to one or more of Claims 1 to 6, characterized in that the or each hydraulic store (52) connected to the housing chamber (18) is under pneumatic servo-pressure.

8. Oscillation damper according to one or more of Claims 1 to 7, characterized in that the two pistons (8, 10; 12, 14) which are driven in opposite directions with respect to the alterations in volume of the respectively associated work spaces (16) are arranged on the same axis at the ends of the same toothed rack (32, 34).

9. Oscillation damper according to one or more of Claims 1 to 8, characterized in that the two pistons (8, 12; 10, 14) which are driven in opposite directions with respect to the alterations in volume of the respectively associated work spaces (16) are guided parallel to one another and are connected to in each case one of two toothed racks (32, 34) which are in engagement with the toothed wheel (30) in diametrically opposing regions thereof.

10. Oscillation damper according to one or more of Claims 1 to 9, characterized in that four pistons (8, 10; 12, 14) are connected to one another in pairs by way of one of two parallel toothed racks (32, 34).

11. Oscillation damper according to one or more of Claims 1 to 10, characterized in that the cylinders (6) receiving the pistons (8 to 14) are connected to a common housing (4), the housing (4) being constructed in particular in longitudinal section to be H-shaped with four cylinders (6) each receiving one of four pistons.

12. Oscillation damper according to one or more of Claims 1 to 11, characterized in that the drive element (22) is constructed as a shaft (21) which is mounted in the housing (4) to be rotatable about the axis of rotation (23) and which is guided to be sealed off from the outside at least at one end and bears an external actuating element, in particular an actuating lever (24).

13. Oscillation damper according to one or more of Claims 1 to 11, characterized in that the housing (4) is subdivided into two housing parts (60, 62) in a plane perpendicular to the axis of rotation (23), the two housing parts (60, 62) being mutually rotatable about the axis of rotation (23) and being connected to one another in sealed off manner and the toothed wheel (30) being rotatably mounted in the first housing part (60) and the second housing part (62) forming the drive element (22) being connected to the toothed wheel (30).

14. Oscillation damper according to one or more of Claims 1 to 13, characterized in that the drive element (22) is connected to the toothed wheel (30) by way of resiliently deformable connection elements (86).

## Revendications

1. Amortisseur de vibrations hydraulique comportant au moins deux pistons (8 à 14) respectivement menés en translation dans un cylindre (6), un élément d'actionnement (22) monté rotatif par rapport au cylindre (6) sur un axe de rotation (23) et pouvant être amené à effectuer des mouvements de rotation oscillants, un organe de transfert transformant les mouvements de rotation de l'élément d'actionnement (22) dans les mouvements de translation des pistons (8 à 14), et comportant également au moins deux espaces de travail (16), remplis avec un milieu hydraulique, et chacun changeant de volume en sens inverse de par les déplacements des pistons, le milieu hydraulique s'écoulant pour l'amortissement, lors des déplacements des pistons, à travers au moins une soupape d'amortissement (40), et l'organe de transfert étant réalisé sous la forme d'un entraînement par engrenage (28) ayant un engrenage (30) relié avec l'élément d'actionnement (22) avec un moment de rotation adapté, et au moins une crémaillère (32, 34) reliée aux pistons (8 à 14) et en prise avec l'engrenage (30), chaque piston (8 à 14) séparant son espace de travail (16) correspondant d'une chambre de boîtier (18) également remplie d'un milieu hydraulique et reliée avec au moins un réservoir hydraulique (52) mis sous précompression, et chaque espace de travail (16) étant relié à la chambre de boîtier (18) par l'intermédiaire d'un agencement de soupape (46, 40, 48; 46, 40, 50) permettant des écoulements d'équilibrage du milieu hydraulique.

2. Amortisseur de vibrations hydraulique selon la revendication 1, caractérisé en ce que chaque piston (8 à 14) sépare son espace de travail (16) correspondant de la même chambre de boîtier (18), unitaire, dont le volume ne varie pas lors des déplacements des pistons et qui de préférence reçoit l'entraînement par engrenage (28).

3. Amortisseur de vibrations hydraulique selon la revendication 1 ou la revendication 2, caractérisé en ce que chaque piston (8 à 14) présente un canal (44) reliant la chambre de boîtier (18) à l'espace de travail (16) correspondant.

4. Amortisseur de vibrations hydraulique selon la revendication 3, caractérisé en ce que dans le canal (44) de chaque piston (8 à 14) une soupape anti-retour (46) est disposée de telle sorte qu'un écoulement hydraulique de la chambre de boîtier (18) dans l'espace de travail (16) à travers le canal (44) est possible et qu'un écoulement inverse est empêché.

5. Amortisseur de vibrations hydraulique selon la revendication 3, caractérisé en ce qu'une soupape d'amortissement est disposée dans le canal (44) de chaque piston (8 à 14).

6. Amortisseur de vibrations hydraulique selon une ou plusieurs des revendications 1 à 5, caractérisé en ce que dans chaque espace de travail (16), ainsi que de préférence dans la chambre de boîtier (18), débouche respectivement au moins une ouverture de raccordement (38) pour le raccordement de conduites externes (42) menant à au moins une soupape d'amortissement (40) de préférence réglable.

7. Amortisseur de vibrations hydraulique selon une ou plusieurs des revendications 1 à 6, caractérisé en ce que le, respectivement chaque réservoir hydraulique (52) relié à la chambre de boîtier (18), est mis sous précompression pneumatique.

8. Amortisseur de vibrations hydraulique selon une ou plusieurs des revendications 1 à 7, caractérisé en ce que les deux pistons (8, 10 ; 12, 14) actionnés en sens inverse dans le but de changer le volume de chaque espace de travail (16) correspondant, sont disposés coaxialement aux extrémités de la même crémaillère (32, 34).

9. Amortisseur de vibrations hydraulique selon une ou plusieurs des revendications 1 à 8, caractérisé en ce que les deux pistons (8, 10 ; 12, 14) actionnés en sens inverse dans le but de changer le volume de chaque espace de travail (16) correspondant sont menés parallèlement l'un à l'autre et sont reliés à respectivement une des deux crémaillères (32, 34), qui sont en prises avec l'engrenage (30) dans des zones diamétralement opposées de celui-ci.

10. Amortisseur de vibrations hydraulique selon une ou plusieurs des revendications 1 à 9, caractérisé en ce que quatre pistons (8, 10 ; 12, 14) sont reliés ensemble par paires par l'intermédiaire de deux crémaillères parallèles (32, 34).

11. Amortisseur de vibrations hydraulique selon une ou plusieurs des revendications 1 à 10, caractérisé en ce que les cylindres (6) recevant les pistons (8 à 14) sont reliés à un boîtier commun (4), le boîter (4) étant réalisé en particulier en coupe longitudinale en forme de H avec quatre cylindres (6) recevant chacun l'un des quatres pistons.

12. Amortisseur de vibrations hydraulique selon une ou plusieurs des revendications 1 à 11, caractérisé en ce que l'élément d'actionnement (22) est réalisé sous la forme d'un arbre (21) monté rotatif autour de l'axe de rotation (23) dans le boîtier (4), ledit arbre (21) étant mené de manière étanche vers l'extérieur au moins à une de ses extrémités et portant un organe d'actionnement externe, en particulier un levier d'actionnement (24).

13. Amortisseur de vibrations hydraulique selon une ou plusieurs des revendications 1 à 11, caractérisé en ce que le boîtier (4) est partagé en deux parties de boîtier (60, 62) par un plan vertical à l'axe de rotation (23), les deux parties de boîtier (60, 62) pouvant être tournées l'une par rapport à l'autre autour de l'axe de rotation (23) et étant reliées ensemble de manière étanche, et l'engrenage (30) étant monté rotatif dans la première partie de boîtier (60) et la deuxième partie de boîtier (62) qui forme l'élément d'actionnement (22) étant reliée à l'engrenage (30).

14. Amortisseur de vibrations hydraulique selon une ou plusieurs des revendications 1 à 13, caractérisé en ce que l'élément d'actionnement (22) est relié à l'engrenage (30) par l'intermédiaire d'éléments de liaison (86) élastiquement déformables.
